(19) Europäisches Patentamt
European Patent Office
Office européen des brevets

(11) **EP 3 049 755 B1**

(12) **EUROPÄISCHE PATENTSCHRIFT**

(45) Veröffentlichungstag und Bekanntmachung des Hinweises auf die Patenterteilung:
**12.08.2020 Patentblatt 2020/33**

(21) Anmeldenummer: **14766909.7**

(22) Anmeldetag: **13.09.2014**

(51) Int Cl.:
*G01B 9/02* (2006.01)    *B23K 26/03* (2006.01)
*G01B 11/22* (2006.01)    *B23K 26/046* (2014.01)

(86) Internationale Anmeldenummer:
**PCT/EP2014/002483**

(87) Internationale Veröffentlichungsnummer:
**WO 2015/039741 (26.03.2015 Gazette 2015/12)**

(54) **VERFAHREN ZUM MESSEN DER EINDRINGTIEFE EINES LASERSTRAHLS IN EIN WERKSTÜCK SOWIE LASERBEARBEITUNGSVORRICHTUNG**

METHOD FOR MEASURING THE DEPTH OF PENETRATION OF A LASER BEAM INTO A WORKPIECE, AND LASER MACHINING DEVICE

PROCÉDÉ DE MESURE DE LA PROFONDEUR DE PÉNÉTRATION D'UN FAISCEAU LASER DANS UNE PIÈCE À USINER ET DISPOSITIF D'USINAGE LASER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.09.2013 DE 102013015656**

(43) Veröffentlichungstag der Anmeldung:
**03.08.2016 Patentblatt 2016/31**

(73) Patentinhaber: **Precitec Optronik GmbH**
**63263 Neu-Isenburg (DE)**

(72) Erfinder:
• **SCHÖNLEBER, Martin**
**63743 Aschaffenburg (DE)**
• **KOGEL-HOLLACHER, Markus**
**63808 Haibach (DE)**
• **BAUTZE, Thibault**
**76137 Karlsruhe (DE)**
• **FRAAS, Christian**
**8400 Winterthur (CH)**

(74) Vertreter: **Ostertag & Partner Patentanwälte mbB**
**Epplestraße 14**
**70597 Stuttgart (DE)**

(56) Entgegenhaltungen:
EP-A1- 2 972 479      DE-A1-102007 032 743
US-A1- 2012 138 586      US-A1- 2012 285 936

EP 3 049 755 B1

**Beschreibung**

HINTERGRUND DER ERFINDUNG

1. Gebiet der Erfindung

Die Erfindung betrifft ein Verfahren zum Messen der Eindringtiefe eines Laserstrahls in ein Werkstück sowie eine Laserbearbeitungsvorrichtung, mit der sich Werkstücke schweißen, schneiden, bohren oder in sonstiger Weise bearbeiten lassen.

2. Beschreibung des Standes der Technik

Laserbearbeitungsvorrichtungen umfassen üblicherweise eine Laserstrahlungsquelle, bei der es sich z. B. um einen FaserLaser oder einen Scheiben-Laser handeln kann. Zur einer Laserbearbeitungsvorrichtung gehören ferner ein Bearbeitungskopf, der den von der Laserstrahlungsquelle erzeugten Laserstrahl in einem Brennfleck fokussiert, und eine Strahlzuführeinrichtung, die den Laserstrahl dem Bearbeitungskopf zuführt. Die Strahlzuführungseinrichtung kann dabei optische Fasern oder andere Lichtleiter und/oder einen oder mehrere Umlenkspiegel mit planen oder gekrümmten Flächen umfassen.

Der Bearbeitungskopf kann an einem beweglichen Roboterarm oder einem anderen Verfahrgerät befestigt sein, das eine Positionierung in allen drei Raumrichtungen ermöglicht. Die Laserstrahlungsquelle ist dabei häufig weiter entfernt vom Bearbeitungskopf oder einem diesen tragenden Verfahrgerät angeordnet.

Ein bislang noch nicht zufriedenstellend gelöstes Problem beim Einsatz von Laserbearbeitungsvorrichtungen besteht darin, die Eindringtiefe des Laserstrahls möglicht genau auf dem gewünschten Sollwert zu halten. Als Eindringtiefe bezeichnet man die axiale Ausdehnung der Dampfkapillare, die von dem Laserstrahl im Werkstück erzeugt wird. Nur wenn die Eindringtiefe ihren Sollwert annimmt, lässt sich das gewünschte Bearbeitungsergebnis erzielen. Ist beispielsweise bei der Verschweißung zweier Metallbleche die Eindringtiefe zu gering, so findet keine oder nur eine unvollständige Verschweißung der beiden Bleche statt. Eine zu große Eindringtiefe hingegen kann zum Durchschweißen führen.

Unerwünschte Schwankungen der Eindringtiefe können aus unterschiedlichen Gründen auftreten. So kann beispielsweise im Verlauf der Laserbearbeitung eine Schutzscheibe, welche die optischen Elemente im Bearbeitungskopf vor Spritzern und anderen Verschmutzungen schützt, einen zunehmenden Teil der Laserstrahlung absorbieren, wodurch die Eindringtiefe abnimmt. Auch Inhomogenitäten in den Werkstücken oder Schwankungen der Verfahrgeschwindigkeit können dazu führen, dass sich die Eindringtiefe lokal verändert und dadurch von ihrem Sollwert abweicht.

Bislang gibt es keine Verfahren, mit denen sich die Eindringtiefe des Laserstrahls zuverlässig während der Laserbearbeitung messen lässt. Dies hängt damit zusammen, dass innerhalb der Dampfkapillare sehr schwierige Messbedingungen herrschen. Die Dampfkapillare ist nicht nur sehr klein und leuchtet thermisch äußerst hell, sondern verändert während der Bearbeitung im Allgemeinen auch ständig ihre Form.

Deswegen schließt man in der Regel mittelbar von Beobachtungen anderer mit der Dampfkapillare zusammenhängender Größen, z. B. ihrer Helligkeit, auf deren axiale Ausdehnung. Diese eher geschätzten als gemessenen Werte der Eindringtiefe wer den mit den Sollwerten verglichen. In einem Regelkreis wird dann die Leistung des Bearbeitungslasers so verändert, dass die Eindringtiefe sich ihrem Sollwert annähert.

Zur Abstandsmessung während der Laserbearbeitung wurde vor einiger Zeit der Einsatz von optischen Kohärenztomographen (engl. Optical Coherence Tomograph, OCT) vorgeschlagen, vgl. insbesondere EP 1 977 850 A1, DE 10 2010 016 862 B3 und US 2012/0138586. Die optische Kohärenztomographie ermöglicht eine hochgenaue und berührungslose optische Abstandsmessung auch in der Nähe der sehr hell thermisch leuchtenden Dampfkapillare, die im Werkstück von dem Laserstrahl in der Umgebung des Brennflecks erzeugt wird. Wenn der Messstrahl scannerartig über die Oberflächen geführt wird, ist sogar die Erfassung eines 3D-Profils der abgetasteten Oberflächen möglich. Wenn der Messstrahl in die Dampfkapillare gerichtet wird, kann im Prinzip auch deren axiale Ausdehnung gemessen werden, wie dies in der US 2012/0285936 A1 beschrieben ist. Mit einem OCT-Messstrahl, der während der Laserbearbeitung scannerartig über die zu bearbeitende Oberfläche des Werkstücks geführt wird, lässt sich während der Laserbearbeitung die Eindringtiefe jedoch nur mit einer unbefriedigenden Genauigkeit messen. Hierunter leidet auch eine Regelung der Eindringtiefe durch Verändern der Laserleistung.

In der US 2012/0285936 A1 ist eine Laserbearbeitungsvorrichtung nach dem Oberbegriff der Ansprüche 1 und 14 offenbart, bei der ein auf die Dampfkapillare gerichteter OCT-Messstrahl so breit ist, dass er auch das Werkstück außerhalb der Dampfkapillare überstreicht.

Weitere Laserbearbeitungsvorrichtungen mit integrierten optischen Abstandsmesseinrichtungen sind aus der DE 10 2007 032 743 A1 und der US 2012/0138586 A1 bekannt. Das Dokument EP 2 972 479 A1, das zwar vor der vorliegenden Anmeldung eingereicht, jedoch danach veröffentlicht wurde, zeigt eine interferometrische Messung der Eindringtiefe eines Laserstrahls in eine Dampfkapillare durch Vergleich mit einem außerhalb der Dampfkapillare befindlichen zweiten Strahl.

ZUSAMMENFASSUNG DER ERFINDUNG

Aufgabe der Erfindung ist es, ein Verfahren anzugeben, mit dem sich die Eindringtiefe eines Laserstrahls in einem Werkstück genauer messen lässt.

Erfindungsgemäß wird diese Aufgabe durch ein Verfahren mit folgenden Schritten gelöst:

a) Fokussieren des Laserstrahls in einem Brennfleck mit Hilfe einer in einem Bearbeitungskopf angeordneten Fokussieroptik, wodurch der Brennfleck in dem Werkstück eine Dampfkapillare erzeugt;

b) Erzeugen eines ersten Messstrahls und eines zweiten Messstrahls mit einem optischen Kohärenztomographen;

c) Richten des ersten Messstrahls auf einen stationären ersten Messpunkt in der Dampfkapillare, und zwar vorzugsweise am Grund der Dampfkapillare, um dadurch einen ersten Abstand zwischen einem Referenzpunkt und dem ersten Messpunkt zu messen;

d) Gleichzeitig mit Schritt c) Richten des zweiten Messstrahls auf einen zweiten Messpunkt auf einer zum Bearbeitungskopf weisenden Oberfläche des Werkstücks außerhalb des Dampfkapillare, um dadurch einen zweiten Abstand zwischen dem Referenzpunkt und dem zweiten Messpunkt zu messen;

e) Bestimmen der Eindringtiefe des Laserstrahls aus dem ersten Abstand und dem zweiten Abstand,

wobei in Schritt d) der zweite Messstrahl mit einer Scaneinrichtung sukzessive auf unterschiedliche zweite Messpunkte auf der Oberfläche des Werkstücks gerichtet wird, und wobei der erste Messstrahl von dem zweiten Messstrahl beim Auftreffen auf das Werkstück durch einen messlichtfreien Raum getrennt ist.

Die Erfindung beruht auf der Erkenntnis, dass man nur dann den Abstand zum Grund der Dampfkapillare mit einer ausreichenden Genauigkeit messen kann, wenn ein Messstrahl eines optischen Kohärenztomographen permanent oder zumindest überwiegend in die Dampfkapillare gerichtet wird. Die bedeutend höhere Messgenauigkeit ist dabei nicht nur eine Folge der größeren Zahl von Einzelmessungen, sondern hängt auch damit zusammen, dass der Messstrahl nur dann sehr genau in die winzige Dampfkapillare gerichtet werden kann, wenn er nicht scannend bewegt wird. Es kann sogar erforderlich sein, die Richtung des Messstrahls vorab genau zu justieren, damit genügend Messwerte vom Grund der Dampfkapillare erhalten werden. Versuche haben gezeigt, dass selbst kleinste Deustierungen, wie sie bei einem scannerartig die Dampfkapillare überstreichenden Messstrahl unvermeidlich sind, die Anzahl der aussagekräftigen Messpunkte und damit die Messgenauigkeit insgesamt drastisch abnimmt.

Selbst wenn sehr viele Messwerte aus der Dampfkapillare zur Verfügung stehen und der Messstrahl gut justiert ist, erhält man aus bislang nicht genau bekannten Gründen nur relativ wenige aussagekräftige Messwerte. Bei einem größeren Teil der Messwerte scheint der Messpunkt nicht auf dem Grund der Dampfkapillare, sondern darüber zu liegen. Nur die Messwerte, welche die größten Abstände repräsentieren, geben tatsächlich Aufschluss über den Ort, an dem sich der Grund der Dampfkapillare befindet. Deswegen werden vorzugsweise die Schritte b) bis c) mehrfach wiederholt und aus daraus erhaltenen Messwerten für den ersten Abstand ein Anteil von Messwerten ausgewählt wird, welche die größten ersten Abstände repräsentieren. Aus diesem Anteil der Messwerte kann dann die tatsächliche Eindringtiefe abgeleitet werden, z.B. mittels einer Regressionsanalyse.

Wenn der Messstrahl in die Dampfkapillare gerichtet wird, lässt sich auf diese Weise nur der Abstand des Grunds der Dampfkapillare zu einem Referenzpunkt bestimmen, bei dem es sich z.B. um einen Nullpunkt der vom Kohärenztomographen durchgeführten Messung der Weglängendifferenzen handeln kann. Um die Eindringtiefe ermitteln zu können, muss zusätzlich gemessen werden, wie weit die Oberfläche des die Dampfkapillare umgebenden Bereichs des Werkstücks von dem Referenzpunkt entfernt ist.

Erfindungsgemäß erzeugt der optische Kohärenztomograph deswegen einen ersten Messstrahl und einen zweiten Messstrahl. Der erste Messstrahl misst den Abstand des Referenzpunktes zum Grund der Dampfkapillare, während der zweite Messstrahl den Abstand des Referenzpunkts zur Oberfläche des die Dampfkapillare umgebenden Bereichs auf dem Werkstück misst. Im Allgemeinen ergibt sich dann durch einfache Differenzbildung der beiden Abstandswerte die Eindringtiefe des Laserstrahls in das Werkstück. Es kann jedoch auch erforderlich sein, die Eindringtiefe auf kompliziertere Weise zu berechnen. Falls sich z.B. bei einer Überprüfung der Messergebnisse ergibt, dass die gemessenen Eindringtiefen generell um einen Faktor oder Betrag x von den tatsächlichen Eindringtiefen abweichen, so lässt sich dies mit einem Korrekturfaktor oder -betrag bei der Berechnung berücksichtigen. Durch einen konstanten, aber materialabhängigen Betrag (Offset) kann beispielsweise der Tatsache Rechnung getragen werden, dass die Tiefe einer Schweißnaht im Allgemeinen etwas größer ist als die Eindringtiefe, da das Werkstück auch noch in einem kleinen Bereich unterhalb der Dampfkapillare schmilzt. Um genaue Messwerte für die Eindringtiefe zu erhalten, sollte der zweite Messpunkt auf der Oberfläche des Werkstücks, auf den der zweite Messstrahl gerichtet wird, nicht zu nah, aber auch nicht zu weit von der Dampfkapillare entfernt sein. Ein Abstand zwischen 1 mm und 2.5 mm hat sich als besonders geeignet herausgestellt. Befindet sich der zweite Messpunkt nämlich zu nah an der Oberfläche, so erfasst er die sich in starker Bewegung befindende oder Blasen werfende Oberfläche der Schmelze. Ist der zweite Messpunkt hingegen zu weit von der Dampfkapillare entfernt, kann es erforderlich werden, Messwerte zur Bestimmung der Eindringtiefe heranzuziehen, die zu unterschiedlichen Zeitpunkten erhalten wurden, oder die Form der Oberfläche in der Nähe der Dampfkapillare durch Nutzung anderweitig bereitgestellter Geometriedaten des Werkstücks (z.B. eine aus CAD-Daten bekannte Neigung einer Planfläche) zu berücksichtigen.

Die zweiten Messpunkte außerhalb der Dampfkapillare können für die Regelung des Abstandes zwischen dem Bearbeitungskopf und der Oberfläche des Werkstücks verwendet werden, wie dies an sich aus der eingangs erwähnten EP 1 977 850 A1 bekannt ist. Bei dieser Regelung wird durch Verfahren des Bearbeitungskopfes und/oder des Werkstücks dafür gesorgt, dass sich der Brennfleck des Laserstrahls stets an der gewünschten Position relativ zur Oberfläche des Werkstücks befindet. Alternativ oder zusätzlich kann auch die Fokussieroptik des Bearbeitungskopfes verstellt werden, um den Brennfleck relativ zur vermessenen Oberfläche des Werkstücks zu positionieren.

Der zweite Messstrahl hat erfindungsgemäß nicht nur die Aufgabe, einen Bezugswert für die Bestimmung der Eindringtiefe bereitzustellen, sondern z. B. auch die über der Schweißnaht entstehende Schweißraupe abzutasten oder die Schmelze zu erfassen, welche die Dampfkapillare umgibt. Insbesondere können zumindest einige der unterschiedlichen zweiten Messpunkte eine von dem Laserstrahl erzeugte Schweißnaht überdecken.

Als günstig hat es sich dabei insbesondere erwiesen, wenn zumindest einige der unterschiedlichen zweiten Messpunkte auf einem Kreis liegen, der die Dampfkapillare umschließt. Auf diese Weise ist gewährleistet, dass man unabhängig von einem etwaigen Verfahrvorgang, bei der die relative Anordnung zwischen Laserstrahl und Werkstück verändert wird, stets Messpunkte im Vorlauf erhält.

Ein Scannen ist jedoch nicht nur beim zweiten Messstrahl, sondern zusätzlich auch beim ersten Messstrahl möglich. Zweckmäßig ist dies insbesondere dann, wenn auch der Brennfleck des Laserstrahls mit Hilfe einer Scaneinrichtung, die üblicherweise eine Anordnung von Galvanospiegeln enthält, über das Werkstück geführt wird. Wenn der Bearbeitungskopf ausreichend weit (z.B. rund 50 cm vom Werkstück) entfernt ist, können weit auseinander liegende Orte auf dem Werkstück extrem schnell von dem Laserstrahl bearbeitet werden. Die vergleichsweise großen Bewegungen des relativ schweren Bearbeitungskopfes werden dabei durch kurze schnelle Bewegungen der leichten Galvanospiegel in der Scaneinrichtung ersetzt. Bearbeitungsverfahren, bei denen sich der Bearbeitungs-kopf weit vom Werkstück entfernt befindet und dieser eine Scaneinrichtung enthält, werden häufig als Fernlaserschweißen (englisch *Remote Welding* oder *Welding-on-the-fly*) oder Fernlaserschneiden (*Remote Laser Cutting*) bezeichnet. Auch für solche Verfahren lässt sich die erfindungsgemäße unabhängige Abtastung der Dampfkapillare und des umgebenden Bereichs vorteilhaft einsetzen. Um einen größeren axialen Messbereich abdecken zu können, kann im Referenzarm des Kohärenztomographen ein Weglängenmodulator angeordnet sein, der synchron zu und in Abhängigkeit von einer Veränderung der Brennweite der Fokussieroptik die optische Weglänge im Referenzarm nachführt. Wegen weiterer Einzelheiten hierzu wird auf die Patentanmeldung DE 10 2013 008 269.2 verwiesen, die am 15.05.2013 eingereicht wurde.

Im Allgemeinen ist es günstig, wenn der erste Messstrahl, der auf den Grund der Dampfkapillare gerichtet wird, koaxial zu dem Laserstrahl eine Fokussieroptik des Bearbeitungskopfes durchtritt. Auf diese Weise ist gewährleistet, dass der dem ersten Messstrahl zugeordnete erste Messpunkt sich stets im Brennflecks des Laserstrahls oder in dessen unmittelbarer Nähe befindet. Da der abzutastende Grund der Dampfkapillare sich in unmittelbarer Nähe des Brennflecks des Laserstrahls befindet, führt dies dazu, dass auch der erste Messstrahl dort seine höchste Intensität hat. Dies wirkt sich günstig auf das Signal-Rausch-Verhältnis und damit auf die Messgenauigkeit aus. Besonders wichtig ist dies bei den oben erwähnten Fernbearbeitungsverfahren, bei denen die Fokussieroptik eine veränderbare Brennweite haben muss.

Im Prinzip ist es möglich, den ersten Messstrahl und den zweiten Messstrahl von zwei voneinander unabhängigen Teilsystemen des optischen Kohärenztomographen erzeugen zu lassen. Da optische Kohärenztomographen jedoch in der Lage sind, Abstände zu mehreren optischen Grenzflächen gleichzeitig zu messen, ist es günstiger, wenn der erste Messstrahl und der zweite Messstrahl zumindest ein optisches Element des optischen Kohärenztomographen gemeinsam durchtreten oder in anderer Weise gemeinsam nutzen. Durch eine solche gemeinsame Nutzung von optischen Elementen lässt sich der konstruktive Aufwand des Kohärenztomographen verringern. Günstig ist es insbesondere, wenn das von dem optischen Kohärenztomographen erzeugte Messlicht erst in einem Objektarm des Kohärenztomographen in den ersten Messstrahl und den zweiten Messstrahl aufgeteilt wird. Zumindest die aufwendigeren Komponenten des optischen Kohärenztomographen wie etwa das darin enthaltene Spektrometer können dann für beide Messstrahlen verwendet werden.

Vorzugsweise werden die Schritte a) bis e) gleichzeitig durchgeführt. Die Messung mit Hilfe der beiden Messstrahlen und die Bearbeitung des Werkstücks mit Hilfe des Laserstrahls erfolgen dann gleichzeitig.

Mit dem erfindungsgemäßen Verfahren wird es möglich, in Abhängigkeit von der in Schritt e) bestimmten Eindringtiefe wenigstens einen Parameter der Laserbearbeitung, insbesondere die Leistung des Laserstrahls oder die Lage des Brennflecks relativ zu dem Werkstück, zu verändern. Die gemessene Eindringtiefe kann somit direkt dazu verwendet werden, die Laserbearbeitung so zu beeinflussen, dass qualitativ hochwertige Bearbeitungsergebnisse erzielt werden. Insbesondere kann die in Schritt e) bestimmte Eindringtiefe als Messgröße einem Regelkreis zur Regelung der Tiefe der Dampfkapillare zugeführt werden.

Falls bei der erfindungsgemäßen Bereitstellung eines ersten Messstrahls, der vorzugsweise permanent auf den Grund der Dampfkapillare gerichtet ist, eine Justierung des ersten Messpunkts erforderlich ist, kann in einem automatischen Justierschritt die Lage des ersten Messpunkts solange mit Hilfe eines auf den ersten Messstrahl einwirkenden Stellelements verändert werden, bis der Anteil an verwertbaren Abstandsmesswerten maximal ist. Ein solcher Justierschritt kann in regelmäßigen zeitlichen Abständen durchgeführt werden oder sogar jedem Bearbeitungsvorgang vorgeschaltet sein. Der Justierschritt kann dabei z. B. an einer Testbearbeitungsstelle des Werkstücks durchgeführt werden, an der nur zum Zwecke der Justierung von dem Laserstrahl eine Dampfkapillare erzeugt wird.

Gegenstand der Erfindung ist außerdem eine Laserbearbeitungsvorrichtung, die für die Bearbeitung eines Werkstücks mit einem Laserstrahl eingerichtet und zur Durchführung des erfindungsgemäßen Verfahrens geeignet ist. Die Laserbearbeitungsvorrichtung weist eine Fokussieroptik auf, die dazu eingerichtet ist, den Laserstrahl in einem Brennfleck zu fokussieren. Ferner weist die Laserbearbeitungsvorrichtung einen optischen Kohärenztomographen auf, der dazu eingerichtet ist, einen ersten Messstrahl auf einen stationären ersten Messpunkt am Grund der Dampfkapillare zu richten, die auf dem Werkstück von dem Brennfleck erzeugt wurde, und dadurch einen ersten Abstand zwischen einem Referenzpunkt und dem ersten Messpunkt zu messen. Der optische Kohärenztomograph ist außerdem dazu eingerichtet, gleichzeitig einen zweiten Messstrahl auf einen zweiten Messpunkt auf einer Oberfläche des Werkstücks außerhalb der Dampfkapillare zu richten und dadurch einen zweiten Abstand zwischen dem Referenzpunkt und dem zweiten Messpunkt zu messen. Die Laserbearbeitungsvorrichtung weist außerdem eine Auswerteeinrichtung auf, die dazu eingerichtet ist, aus dem ersten Abstand und dem zweiten Abstand die Eindringtiefe des Laserstrahls zu bestimmen. In einem Objektarm des Kohärenztomographen ist eine Scaneinrichtung angeordnet, die dazu eingerichtet ist, den zweiten Messstrahl sukzessive auf unterschiedliche zweite Messpunkte auf der Oberfläche des Werkstücks zu richten. Der erste Messstrahl ist dabei von dem zweiten Messstrahl beim Auftreffen auf das Werkstück durch einen messlichtfreien Raum getrennt.

Vorzugsweise durchtritt der erste Messstrahl koaxial zu dem Laserstrahl die Fokussieroptik. Letztere kann eine veränderbare Brennweite haben, so dass der erste Messstrahl von der Fokussieroptik stets in der gleichen Brennebene fokussiert wird, in der sich auch der Brennfleck des Laserstrahls befindet.

Besonders günstig ist es, wenn der optische Kohärenztomograph im Frequenzbereich arbeitet (engl. *Frequency Domain,* FD-OCT). Derartige Kohärenztomographen haben einen großen axialen Messbereich und benötigen keine optischen Weglängenmodulatoren im Referenzarm.

## KURZE BESCHREIBUNG DER ZEICHNUNGEN

Weitere Merkmale und Vorteile der Erfindung ergeben sich aus der nachfolgenden Beschreibung der Ausführungsbeispiele anhand der Zeichnungen. Darin zeigen:

| | |
|---|---|
| Figur 1 | eine schematische Darstellung einer erfindungsgemäßen Laserbearbeitungsvorrichtung gemäß einem ersten Ausführungsbeispiel beim Verschweißen zweier Werkstücke; |
| Figur 2 | den inneren Aufbau der in der Figur 1 gezeigten Laserbearbeitungsvorrichtung in einer schematischen Darstellung; |
| Figuren 3a und 3b | vergrößerte Meridionalschnitte durch eine rotierende Keilplatte, die in der Laserbearbeitungsvorrichtung enthalten ist; |
| Figur 4 | einen vergrößerten Ausschnitt aus den Werkstücken, in dem die Dampfkapillare erkennbar ist; |
| Figur 5 | eine Draufsicht auf den in der Figur 4 gezeigten Ausschnitt; |
| Figur 6 | eine gegenüber der Figur 4 vereinfachte Darstellung für den Fall von Werkstücken mit variierender Dicke; |
| Figur 7 | einen Graphen, in dem Abstandsmesswerte über der Zeit t aufgetragen sind; |

Figur 8        einen Graphen, in dem die Eindringtiefe als Funktion der Zeit aufgetragen ist;

Figur 9        einen Graphen, in dem Messwerte aufgetragen sind, die unter Verwendung eines Kohärenztomographen nach dem Stand der Technik erhalten wurden, bei dem ein einziger Messstrahl scannend das Werkstück überstreicht;

Figur 10        den inneren Aufbau einer erfindungsgemäßen Laserbearbeitungsvorrichtung gemäß einem zweiten Ausführungsbeispiel in einer an die Figur 2 angelehnten schematischen Darstellung;

Figur 11        einen vergrößerten Ausschnitt aus den Werkstücken für das in der Figur 10 gezeigte Ausführungsbeispiel in einer an die Figur 4 angelehnten Schnittdarstellung;

Figur 12        den inneren Aufbau einer erfindungsgemäßen Laserbearbeitungsvorrichtung gemäß einem dritten Ausführungsbeispiel in einer an die Figur 2 angelehnten schematischen Darstellung;

Figuren 13a und 13b        Meridionalschnitte durch ein rotierendes optisches Element, das in der Laserbearbeitungsvorrichtung gemäß dem dritten Ausführungsbeispiel enthalten ist.

BESCHREIBUNG BEVORZUGTER AUSFÜHRUNGSBEISPIELE

*1. Aufbau der Laserbearbeitungsvorrichtung*

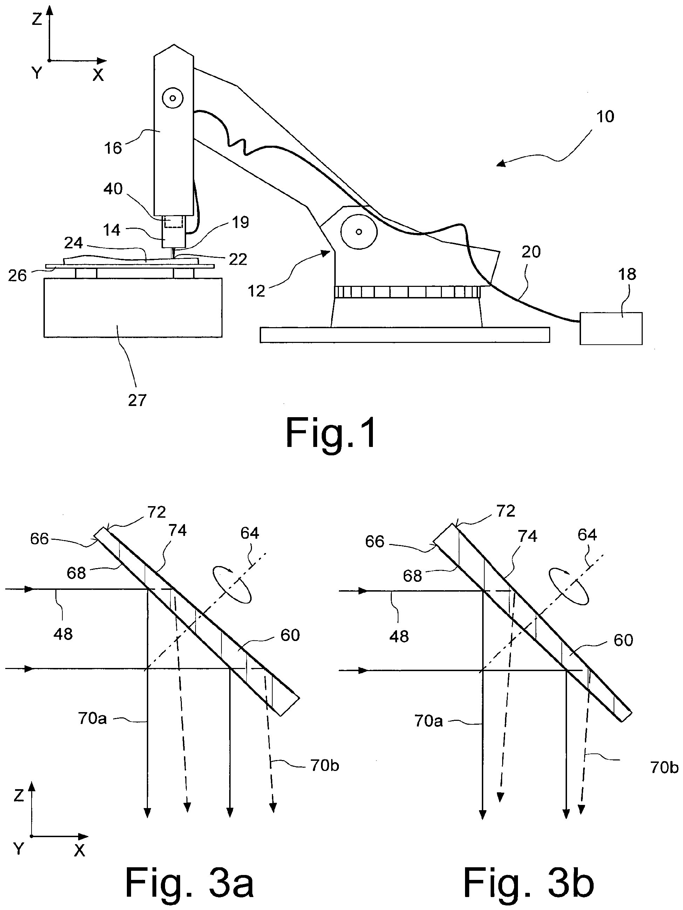

Die Figur 1 zeigt in einer schematischen Darstellung ein Ausführungsbeispiel für eine erfindungsgemäße Laserbearbeitungsvorrichtung 10, die einen Roboter 12 und einen Bearbeitungskopf 14 umfasst, der an einem beweglichen Arm 16 des Roboters 12 befestigt ist.

Zur Laserbearbeitungsvorrichtung 10 gehört außerdem eine Laserstrahlungsquelle 18, die im dargestellten Ausführungsbeispiel als Scheiben- oder Faserlaser ausgebildet ist. Der von der Laserstrahlungsquelle 18 erzeugte Laserstrahl 19 wird über eine optische Faser 20 dem Bearbeitungskopf 14 zugeführt und von diesem in einem Brennfleck 22 fokussiert.

Im dargestellten Ausführungsbeispiel soll die Laserbearbeitungsvorrichtung 10 dazu verwendet werden, ein erstes metallisches Werkstück 24 mit variierender Dicke mit einem zweiten metallischen Werkstück 26 zu verschweißen, das auf einem Werkstückhalter 27 befestigt ist. Der von dem Bearbeitungskopf 14 erzeugte Brennfleck 22 muss deswegen präzise in der Nähe des Übergangs zwischen dem ersten Werkstück 24 und dem zweiten Werkstück 26 positioniert werden.

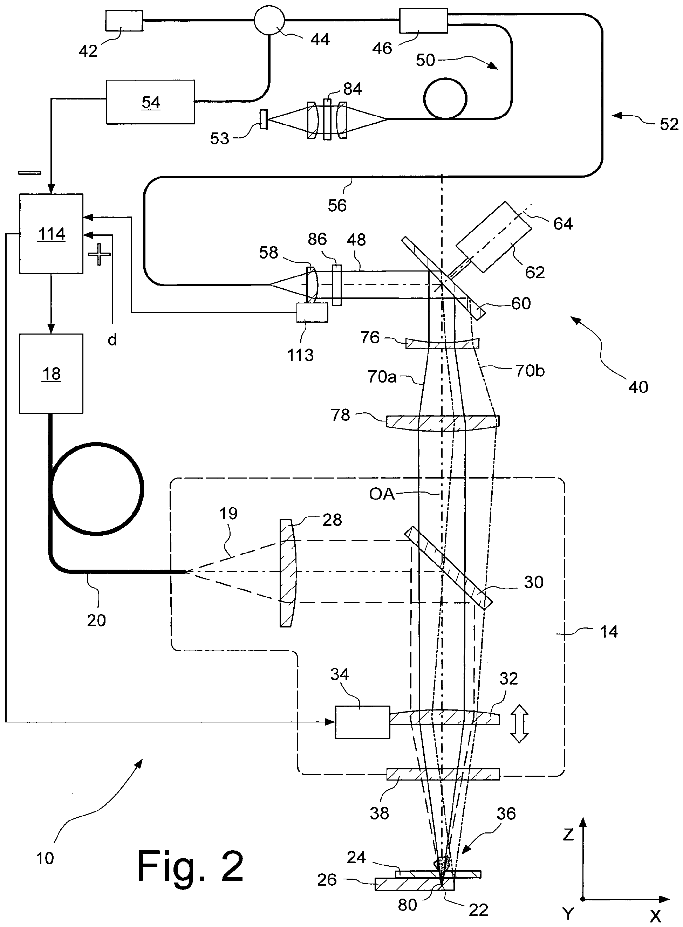

Die Figur 2 zeigt in einer schematischen Darstellung den inneren Aufbau der Laserbearbeitungsvorrichtung 10. Der von der Laserstrahlungsquelle 18 erzeugte Laserstrahl 19 tritt im Bearbeitungskopf 14 aus der optischen Faser 20 aus und wird von einer ersten Kollimatorlinse 28 kollimiert. Der kollimierte Laserstrahl 19 wird dann von einem dichroitischen Spiegel 30 um 90° umgelenkt und trifft auf eine Fokussieroptik 32, deren Brennweite durch axiales Verlagern einer oder mehrerer Linsen mit Hilfe eines Stellantriebs 34 veränderbar ist. Auf diese Weise kann die axiale Lage des Brennflecks 22 durch Verstellen der Fokussieroptik 32 verändert werden. Das letzte optische Element im Strahlengang des Laserstrahls 19 ist eine Schutzscheibe 38, die austauschbar am Bearbeitungskopf 14 befestigt ist und dessen übrige optische Elemente vor Spritzern und anderen Verschmutzungen schützt, die an einer bei 38 angedeuteten Bearbeitungsstelle entstehen.

Die Laserbearbeitungsvorrichtung 10 umfasst außerdem einen optischen Kohärenztomographen 40, der im Frequenzbereich arbeitet (sog. FD-OCT). Der Kohärenztomograph 40 weist eine Lichtquelle 42, einen optischen Zirkulator 44 und einen Faserkoppler 46 auf, der von der Lichtquelle 42 erzeugtes Messlicht 48 in einen Referenzarm 50 und einen Objektarm 52 aufteilt. Im Referenzarm 50 wird das Messlicht nach Durchlaufen eines optischen Weges, der annähernd dem optischen Weg des Messlichts im Objektarm 52 entspricht, in sich an einem Spiegel 53 reflektiert und gelangt zurück zum optischen Zirkulator 44, der das Messlicht an einen Spektrographen 54 weiterleitet.

Im Objektarm 52 tritt das Messlicht am Ende einer weiteren optischen Faser 56 aus und wird von einer zweiten Kollimatorlinse 58 kollimiert. Das kollimierte Messlicht 48 durchtritt zunächst einen ersten Faradayrotator 86, der die Polarisationsrichtung um 45° dreht. Ein gleichartiger zweiter Faradayrotator 84 ist im Abschnitt der Freistrahlausbreitung im Referenzarm 50 angeordnet. Die beiden Faradayrotatoren 84, 86 haben die Aufgabe, Störungen zu vermeiden, die entstehen können, wenn die im Kohärenztomographen 40 verwendeten optischen Fasern den Polarisationszustand nicht erhalten.

Anschließend trifft das kollimierte Messlicht 48 auf eine Keilplatte 60, die von einem Motor 62 in eine Rotation um eine Drehachse 64 versetzt werden kann. Wie in der vergrößerten Darstellung der Figur 3a erkennbar ist, hat die Keilplatte 60 eine erste Planfläche 66, die senkrecht zur Drehachse 64 ausgerichtet und mit Beschichtung 68 versehen ist, die etwa 50% des auftreffenden Messlichts 48 reflektiert. Da die Planfläche 66 ihre Orientierung bei einer Rotation der Keilplatte 60 nicht ändert, erzeugt sie einen ersten Messstrahl 70a, dessen Richtung ebenfalls unveränderlich ist.

Der Anteil des Messlichts 48, der die teilweise reflektierende Beschichtung 68 durchtritt, trifft auf eine zweite Planfläche 72 der Keilplatte 60, die einen von 90° verschiedenen Winkel zur Drehachse 64 einschließt. Die Orientierung der zweiten Planfläche 72 hängt somit vom Drehwinkel der Keilplatte 60 ab. Die zweite Planfläche 72 ist mit einer vollständig reflektierenden Beschichtung 74 versehen. Da die beiden Planflächen 66, 72 nicht parallel zueinander sind, erzeugt die zweite Planfläche 72 einen zweiten Messstrahl 70b, der eine andere Ausbreitungsrichtung hat als der erste Messstrahl 70a. Die Ausbreitungsrichtung hängt dabei vom Drehwinkel der Keilplatte 60 bezüglich der Drehachse 64 ab, wie dies die Figur 3b illustriert. Die Keilplatte 60 ist dort im Vergleich zu der in der Figur 3a gezeigten Anordnung um einen Winkel von 180° um die Drehachse 64 verdreht worden. Bei einer Rotation der Keilplatte 60 um die Drehachse 64 rotiert der zweite Messstrahls 70b deswegen kontinuierlich um den feststehenden ersten Messstrahl 70a.

Im Folgenden wird wieder auf die Figur 2 Bezug genommen, um den Strahlengang der beiden Messstrahlen 70a, 70b näher zu erläutern. Die Messstrahlen 70a, 70b, die mit durchgezogenen bzw. doppel-strichpunktierten Linien angedeutet sind, werden zunächst mit Hilfe einer Zerstreuungslinse 76 aufgeweitet und dann von einer dritten Kollimatorlinse 78 kollimiert. Nach Durchtritt durch den dichroitischen Spiegel 30, der für die Wellenlängen des Messlichts durchlässig ist, werden die Messstrahlen 70a, 70b genauso wie der Laserstrahl 19 von der Fokussieroptik 32 fokussiert und nach Durchtritt durch die Schutzscheibe 38 auf die Werkstücke 24, 26 gerichtet. Da der erste Messstrahl 70a sich koaxial zum Laserstrahl 19 ausbreitet, fällt der Brennfleck 80 des ersten Messstrahls 70a mit dem Brennfleck 22 des Laserstrahls 19 zusammen, wenn man von Störeffekten wie chromatischer Aberration oder Justagefehlern absieht. Die Brennebene des zweiten Messstrahls 70b ist koplanar mit der Brennebene des Laserstrahls 19 und des ersten Messstrahls 70a.

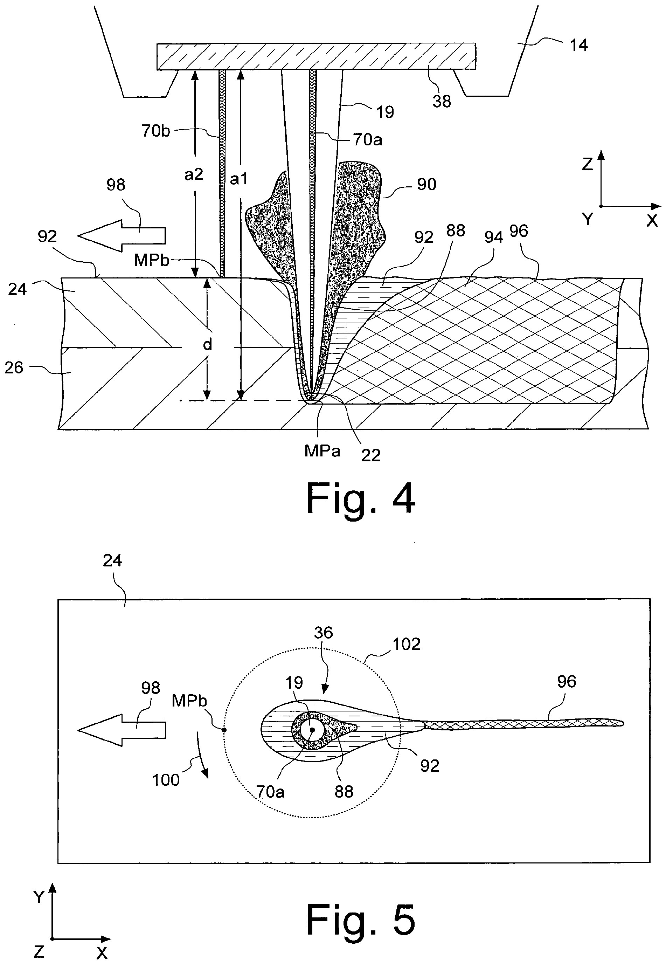

Im Folgenden werden mit Bezug auf die Figur 4 die Verhältnisse an der Bearbeitungsstelle 36 näher beschrieben. Die Figur 4 zeigt einen vergrößerten Ausschnitt aus den Werkstücken 24, 26, die miteinander verschweißt werden sollen. Die Verfahrrichtung des Bearbeitungskopfes 14 relativ zu den Werkstücken 24, 26 ist mit 98 bezeichnet.

Der aus der Schutzscheibe 38 austretende fokussierte Laserstrahl 19 erreicht in der Nähe des Brennflecks 22 eine so hohe Energiedichte, dass das umgebende Metall verdampft und dadurch eine Dampfkapillare 88 bildet, die in die beiden Werkstücke 24, 26 hineinreicht. Auch wenn ein Teil des verdampften Metalls eine Wolke 90 über der Oberfläche 92 des ersten Werkstücks 24 bildet, wird als Dampfkapillare 88 nur der sich während der Bearbeitung unterhalb der Oberfläche 92 ausbildende Hohlraum bezeichnet.

Die Dampfkapillare 88 ist von einer Schmelze 92 umgeben, die mit zunehmendem Abstand vom Brennfleck 22 des Laserstrahls 19 erstarrt. Im Bereich der Schmelze 92 haben sich die Werkstoffe der beiden Werkstücke 24, 26 miteinander verbunden. Wenn die Schmelze 92 erstarrt, entsteht dadurch eine Schweißnaht 96, deren nach oben weisende Seite gewellt ist und als Schweißraupe 96 bezeichnet wird.

In der vergrößerten Darstellung der Figur 4 ist erkennbar, dass der Brennfleck, der von dem ersten Messstrahl 70a erzeugt wird, annähernd mit dem Brennfleck 22 des Laserstrahls 19 zusammenfällt. In der Nähe des Brennflecks 22 trifft der erste Messstrahl 70a am Grund der Dampfkapillare 88 auf die metallische Schmelze 92 und wird von dort zurück in den Objektarm 52 des Kohärenztomographen 40 reflektiert. Der Punkt, an dem der erste Messstrahl 70a auf den Grund der Dampfkapillare trifft, stellt einen dem ersten Messstrahl 70a zugeordneten ersten Messpunkt MPa dar.

Der Punkt, an dem der zweite Messstrahl 70b von der die Dampfkapillare 88 umgebenden Oberfläche 92 des ersten Werkstücks 24 reflektiert wird, stellt einen dem zweiten Messstrahl 70b zugeordneten zweiten Messpunkt MPb dar.

Die Figur 5 zeigt für den in der Figur 4 gezeigten Ausschnitt eine Draufsicht auf das erste Werkstück 24. Wird zur Erzeugung einer Schweißnaht 94 der Bearbeitungskopf 14 entlang der Verfahrrichtung 98 verfahren, so entsteht in Verfahrrichtung 98 hinter der Dampfkapillare 88 die bereits erwähnte Schweißraupe 96. Mit einem Pfeil 100 ist angedeutet, wie sich der zweite Messpunkt MPb während einer Rotation der Keilplatte 60 auf einer Kreisbahn 102 um die Bearbeitungsstelle 36 herum dreht. Der zweite Messpunkt MPb überstreicht dabei auch einen Teil der Schmelze 92. Wird der Keilwinkel der Keilplatte 60 größer gewählt, so vergrößert sich der Radius des Kreises 102. In diesem Falle kann der zweite Messpunkt MPb auch die Schweißraupe 96 überstreichen. Bei einer Messfrequenz des Kohärenztomographen 40 in der Größenordnung von einigen kHz, einer Drehfrequenz der Keilplatte 60 in der Größenordnung von 100 Hz und einer Geschwindigkeit entlang der Verfahrrichtung 98 in der Größenordnung von 1 m/s lässt sich auf diese Weise das Relief der Oberfläche 92 in der Umgebung der Bearbeitungsstelle 36 mit hoher Auflösung abtasten.

*2. Funktion*

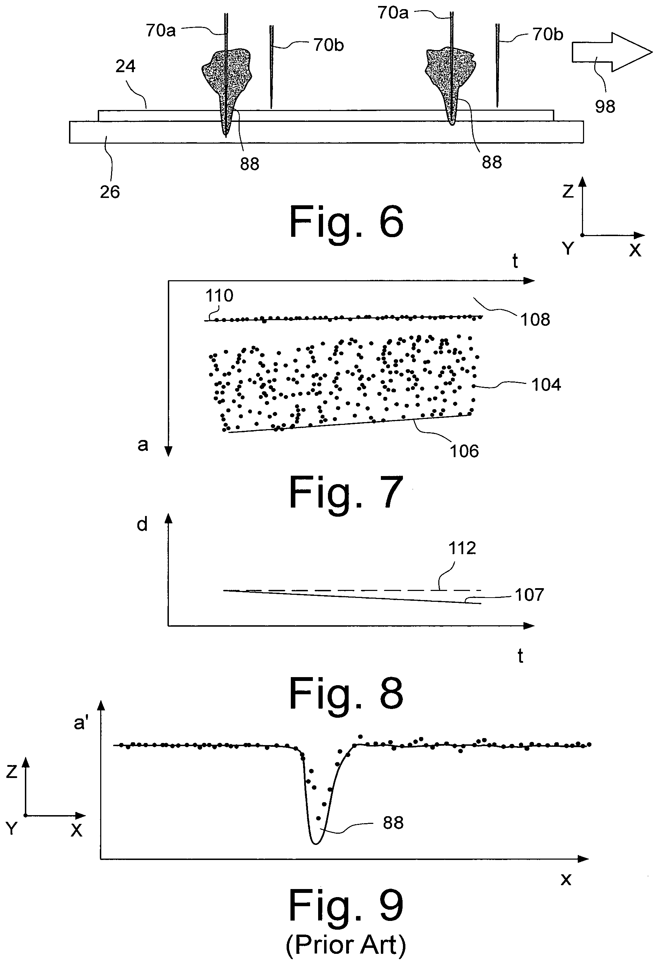

Im Folgenden wir die Funktion der Laserbearbeitungsvorrichtung 10 näher mit Bezug auf die Figuren 6 bis 9 erläutert.

In einem ersten Schritt werden Sollwerte für die Eindringtiefe des Laserstrahls 19 festgelegt. Die Eindringtiefe ist in der Figur 4 mit d bezeichnet und ist als die Tiefe der Dampfkapillare 88 unterhalb der umgebenden (noch festen) Oberfläche 92 des ersten Werkstücks 94 definiert. Ist die Eindringtiefe zu gering, werden die beiden Werkstücke 24, 26 nicht oder nur unvollständig miteinander verschweißt. Ist die Eindringtiefe d hingegen zu groß, kommt es zu einem Durchschweißen.

Bei planen Werkstücken konstanter Dicke ist die Eindringtiefe d im Allgemeinen konstant. Im Allgemeinen jedoch hängt die Eindringtiefe d von den Koordinaten x, y auf den Werkstücken ab. Veränderungen der Eindringtiefe d können beispielsweise dann erforderlich sein, wenn die Dicke des ersten Werkstücks 24 ortsabhängig ist, wie dies in der Figur 6 illustriert ist. Nur wenn die Eindringtiefe d zunimmt, wie dies rechts in der Figur 6 mit einer gestrichelten Linie angedeutet ist, kann das erste Werkstück 24 mit keilförmigem Querschnitt mit gleich bleibender Qualität mit dem zweiten Werkstück 26 verschweißt werden.

Zur Messung der Eindringtiefe d misst der erste Messstrahl 70a am ersten Messpunkt MPa den Abstand des Grunds der Dampfkapillare 88 relativ zu einem Referenzpunkt, bei dem es sich z. B. um einen Punkt auf der Oberfläche des Schutzglases 38 handeln kann, der von der optischen Achse OA durchsetzt wird. In der Figur 4 ist dieser Abstand mit a1 bezeichnet.

Der zweite Messstrahl 70b misst am zweiten Messpunkt MPb den in der Figur 4 mit a2 bezeichneten Abstand zwischen dem Referenzpunkt und der die Dampfkapillare 88 umgebenden Oberfläche 92 des ersten Werkstücks 24. Die Eindringtiefe d ergibt sich dann einfach als Differenz der Abstände a2 und a1. Damit diese Beziehung gültig ist, sollte sich der dem zweiten Messstrahl 70b zugeordnete zweite Messpunkt MPb nahe, z.B. in einem lateralen Abstand von weniger als 2.5 mm und vorzugsweise von weniger als 1 mm, zur Dampfkapillare 88 befinden, damit etwaige Stufen oder Krümmungen an der Oberfläche 92 des ersten Werkstücks 24 nicht die Messung verfälschen. Derartige Stufen oder Krümmungen kann aber auch dadurch Rechnung getragen werden, dass bei der Bestimmung der Eindringtiefe auf Messwerte für den Abstand a2 herangezogen werden, die zu einem vorhergehenden Zeitpunkt ermittelt wurden, als sich der zweite Messpunkt MPb an den Koordinaten x, y befand, an denen sich nun der erste Messpunkt befindet. Denn wie oben bereits erwähnt wurde, erhält man durch die kreisförmige Abtastung der Umgebung der Bearbeitungsstelle 36 mit dem zweiten Messstrahl 70b im Zusammenwirken mit der Verfahrbewegung das Relief der Oberfläche 92 des ersten Werkstücks 24, und zwar sowohl für den Zustand vor der Bearbeitung mit dem Laserstrahl 19 als auch danach.

Die Ermittlungen der Abstände a1, a2 mit Hilfe des Kohärenztomographen 40 erfolgt in an sich herkömmlicher Art und Weise. Das im Objektarm 52 geführte Messlicht 48 tritt nach Reflexion an den Messpunkten MPa, MPb wieder in den Objektarm 52 ein und gelangt über die weitere optische Faser 56 zurück zum Faserkoppler 46 und zu, optischen Zirkulator 44. Im Spektographen 54 überlagert sich das reflektierte Messlicht mit dem Messlicht, das im Referenzarm 50 reflektiert wurde. Im Spektographen 54 kommt es zur Interferenz des im Referenzarm 50 und im Objektarm 52 reflektierten Messlichts. Das Interferenzsignal wird einer Steuer- und Auswerteeinrichtung 114 (vgl. Figur 2) zugeleitet, die daraus die optische Weglängendifferenz des im Referenzarm 50 und im Objektarm 52 reflektierten Messlichts errechnet. Daraus lassen sich die Abstände a1, a2 der Messpunkte MPa, MPb von einem gemeinsamen Referenzpunkt ableiten.

Zu jedem Zeitpunkt erhält man zwei Signalanteile im Spektrum, nämlich einen für den ersten Messpunkt MPa und einen zweiten für den zweiten Messpunkt MPb. Eine Besonderheit bei der Durchführung des erfindungsgemäßen Verfahrens besteht darin, dass nur der erste Messpunkt MPa, nicht aber der zweite Messpunkt MPb auf der optischen Achse OA liegt.

Die Figur 7 illustriert schematisch vom Kohärenztomographen 40 erzeugte Messwerte, wenn die beiden Messstrahlen 70a, 70b entlang der Verfahrrichtung 98 über die in der Figur 6 gezeigten Werkstücke 24, 26 während eines Schweißvorgangs gefahren werden. Auf der Abszisse ist die Zeit t und auf der Ordinate der Abstand a zu dem Referenzpunkt dargestellt. Das Koordinatensystem wurde auf dem Kopf stehend dargestellt, um die Abstandswerte besser mit den in der Figur 6 gezeigten Geometrien der Werkstücke 24, 26 vergleichen zu können.

Im unteren Bereich des Graphen findet sich eine Anordnung erster Messwerte 104, die dem ersten Messpunkt MPa zugeordnet werden können. Man erkennt, dass die ersten Messwerte 104 über einen größeren Abstandsbereich hinweg gestreut sind. Versuche haben gezeigt, dass der erste Messstrahl 70a häufig reflektiert wird, bevor er den Grund der Dampfkapillare 88 erreicht. Die genauen Ursachen hierfür sind noch nicht im Einzelnen bekannt, da die Vorgänge in der Dampfkapillare 88 komplex und schwer zu beobachten sind. Möglicherweise bewegt sich die Dampfkapillare 88 während der Laserbearbeitung so rasch in lateraler Richtung, dass der erste Messstrahl 70a häufig nur auf die seitliche Wandung der Dampfkapillare, nicht aber auf deren Grund trifft. Als Ursache denkbar sind auch Metalltröpfchen, die sich durch Kondensation des Metalldampfes oder durch Lösen von Spritzern aus der Schmelze 92 in der Dampfkapillare 88 bilden.

Untersuchungen haben ergeben, dass nur die größten Abstandswerte in dem Graphen der Figur 7 den Abstand a1 zum Grund der Dampfkapillare 88 repräsentieren. Eine Ausgleichsgerade 106 durch diese unteren Messpunkte 104 repräsentiert damit die Abstandsfunktion a1(t). Verwendet wird somit nur ein Anteil der größten Eindringtiefen d; die übrigen Messwerte für den ersten Messpunkt MPa sind zu verwerfen.

Die oben in der Figur 7 erkennbaren zweiten Messwerte 108 wurden vom zweiten Messstrahl 70b zu denjenigen Zeitpunkten erzeugt, in denen sich der zweite Messstrahl 70b in Verfahrrichtung 98 vor dem ersten Messstrahl 70a befindet. Dieser Zustand ist in der Figur 5 illustriert. Eine Ausgleichgerade durch die zweiten Messwerte 108 liefert somit die Funktion für den Abstand a2(t). Zu einem gegebenen Zeitpunkt t' beträgt die Eindringtiefe d somit

$$d = a2(t') - a1(t') \quad .$$

Die zeitliche Veränderung der Eindringtiefe d(t) ist in dem Graphen der Figur 8 mit einer durchgezogenen Linie 107 dargestellt. Mit einer gestrichelten Linie 112 ist die vorab festgelegte Solleindringtiefe $d_f(t)$ für diesen Schweißvorgang festgelegt. Man erkennt, dass die tatsächliche Eindringtiefe d(t) im Verlauf des Schweißvorgangs zunehmend von ihrem Sollwert abweicht. Ursache hierfür kann z.B. eine zunehmende Verschmutzung der Schutzscheibe 38 sein, wodurch immer weniger Laserstrahlung 19 die Werkstücke 24, 26 erreicht.

Abweichungen der Eindringtiefe d von den Sollwerten können nur innerhalb vorgegebener Grenzen toleriert werden. Werden diese Grenzen überschritten, so wird die Leistung des Laserstrahls 19 während des Schweißvorgangs kontinuierlich oder schrittweise verändert, um ein Überschreiten der Grenzen zu verhindern.

Deswegen wird in der erfindungsgemäßen Laserbearbeitungsvorrichtung 10 der Steuer- und Auswerteeinrichtung 114, die sowohl mit der Laserstrahlungsquelle 18 als auch mit dem Fokussierantrieb 34 der Fokussieroptik 32 in Signalverbindung steht, der Sollwert für die Eindringtiefe d(t) zugeführt. Die Steuer- und Auswerteeinrichtung ist im dargestellten Ausführungsbeispiel Teil eines Regelkreises, dem die gemessenen Werte für die Eindringtiefe als Messgröße zugeführt werden. Die Steuer- und Auswerteeinrichtung 114 vergleicht die gemessenen Werte für die Eindringtiefe d(t) mit den Sollwerten $d_f(t)$ und regelt die Leistung der Laserstrahlungsquelle 18 so, dass die gemessene Eindringtiefe d(t) möglichst wenig von dem Sollwert abweicht. Zusätzlich oder alternativ hierzu kann auch die Fokussieroptik 32 so verstellt werden, dass sich der Brennfleck 22 des Laserstrahls 19 in axialer Richtung verlagert, um auf diese Weise die Eindringtiefe d zu verändern.

Die Figur 9 illustriert zum Vergleich eine Messung der Eindringtiefe, die man erhält, wenn man während des Schweißvorgangs mit einem einzigen Messstrahl die Bearbeitungsstelle entlang der Verfahrrichtung 98 abfährt. Eine durchgezogene Linie gibt die tatsächliche Geometrie der Dampfkapillare 88 wieder. Man erkennt, dass sich im Bereich der Dampfkapillare 88 so wenige Messwerte befinden, dass keine verlässlichen Aussagen zu der Eindringtiefe getroffen werden können. Nur wenn der erste Messstrahl 70a erfindungsgemäß permanent oder über einen längeren Zeitraum auf den Grund der Dampfkapillare 88 gerichtet ist, erhält man Messwerte, die verlässliche Aussagen über die Eindringtiefe ermöglichen, wie dies oben mit Bezug auf die Figur 7 erläutert wurde.

Für eine genaue Messung des Abstands a1 zwischen dem Grund der Dampfkapillare 88 und dem Referenzpunkt kann es erforderlich sein, vor Beginn des Bearbeitungsvorgangs die Richtung des ersten Messstrahls 70a hochgenau zu justieren. Die Justierung kann dabei z. B. durch Verkippen einer oder mehrerer der im Objektarm 52 angeordneten Linsen 58, 76, 78 erfolgen. Zur Justierung der lateralen Position der Messstrahlen 70a, 70b ist insbesondere eine Querverschiebung einer der Linsen 76 oder 78 in Betracht. Zu Justierung in axialer Richtung kann der Abstand zwischen den Linsen 76 und 78 verändert werden. Vorzugsweise erfolgt diese Justierung in einem automatischen Justierschritt, bei dem zunächst an einer Testbearbeitungsstelle nur zum Zwecke der Justierung von dem Laserstrahl 19 eine Dampfkapillare 88 erzeugt und deren Tiefe gleichzeitig mit dem Kohärenztomographen 40 gemessen wird. Dabei verkippt ein mit der Steuer- und Auswerteeinrichtung 114 verbundenes Stellelement 113 (vgl. Figur 2) die zweite Kollimatorlinse 58 so lange, bis sich der erste Messpunkt MPa an einer Position befindet, an der man maximal viele verwertbare Messwerte erhält.

Anstelle einer Verkippung der Linse 58 kommen natürlich auch andere Maßnahmen in Betracht, um den ersten Messstrahl 70a zu justieren. Besonders für diese Zwecke geeignet ist ein um zwei Achsen mit Hilfe von Aktuatoren verstellbarer Spiegel, der auch als MEMS-Spiegel ausgebildet sein kann.

*3. Alternative Ausführungsbeispiele*

a) Scanspiegel

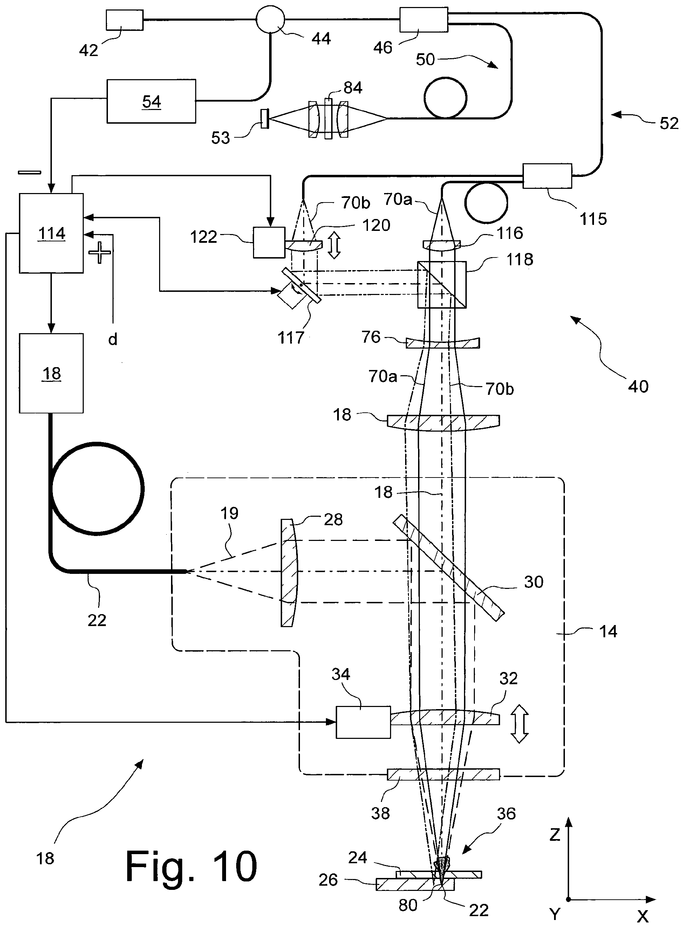

Die Figur 10 illustriert in einer an die Figur 2 angelehnten Darstellung ein anderes Ausführungsbeispiel für eine erfindungsgemäße Laserbearbeitungsvorrichtung 10. Im Unterschied zu dem in der Figur 2 gezeigten Ausführungsbeispiel werden die beiden Messstrahlen 70a, 70b nicht von einer rotierenden Keilplatte 60, sondern von einem zweiten Faserkoppler 115 erzeugt. Der erste Messstrahl 70a durchtritt nach Kollimierung durch eine dritte Kollimatorlinse 116 einen Strahlteilerwürfel 118 und wird dann wieder von den nachfolgenden optischen Elementen auf den ersten Messpunkt MPa in der Nähe des Brennflecks 22 fokussiert, wie dies oben in Bezug auf die Figur 2 erläutert wurde.

Der von dem zweiten Faserkoppler 115 ausgekoppelte zweite Messstrahl 70b trifft nach Kollimierung durch eine vierte Kollimatorlinse 120 auf einen Scanspiegel 117, der sowohl um seine Y-Achse als um seine X-Achse mit Hilfe von nicht näher dargestellten Aktuatoren verschwenkbar ist. Der verschwenkte zweite Messstrahl 70b wird vom Strahlteilerwürfel 118 in den Strahlengang des ersten Messstrahls 70a eingekoppelt und auf einen zweiten Messpunkt MPb gerichtet. Im Gegensatz zu dem in der Figur 2 beschriebene Ausführungsbeispiel lässt sich der zweite Messpunkt MPb somit nicht nur auf einer Kreisbahn um die Bearbeitungsstelle 36 herum verfahren, sondern in beliebiger Weise über den die Bearbeitungsstelle 36 umgebenden Bereich führen. Dies kann beispielsweise dann zweckmäßig sein, wenn ein besonderes Interesse an einer hochaufgelösten Erfassung des Oberflächenreliefs der Schweißraupe 96 besteht.

Wenn der Scanspiegel 113 zu Schwingungen mit den Eigenfrequenzen angeregt wird, beschreibt der zweite Messpunkt MPb auf der Oberfläche 92 des zweiten Werkstücks 24 Lissajous-Figuren, mit denen eine besonders schnelle Abtastung auch großer Flächen möglich ist.

Um Lichtverluste am zweiten Faserkoppler 115 und dem Strahlteilerwürfel 118 zu vermeiden, kann der zweite Faserkoppler 114 das darin eintretende Messlicht nach Polarisationen oder Wellenlängen aufteilen. Wenn der zweite Faserkoppler polarisationsselektiv ist, muss auch der Strahlteilerwürfel 118 polarisationsselektiv wirken. Ist der zweite Faserkoppler hingegen wellenlängenselektiv, so muss auch der Strahlteilerwürfel 118 eine dichroitische Wirkung haben.

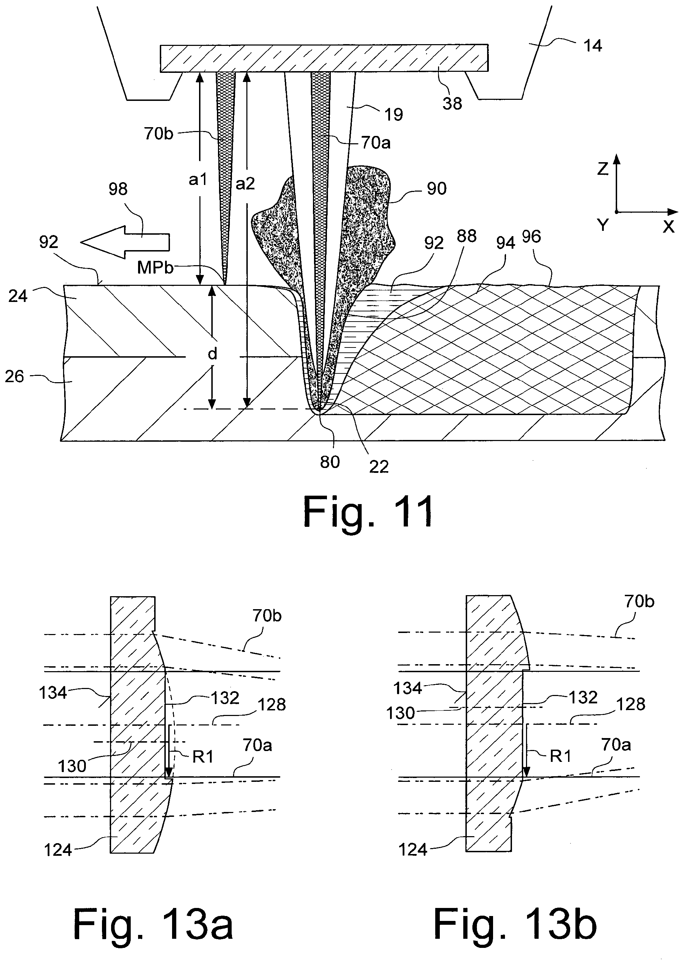

In der Figur 10 ist in der vierten Kollimatorlinse 120, die den zweiten Messstrahl 70b kollimiert, ein Aktuator 122 zugeordnet, mit dem sich die vierte Kollimatorlinse 120 in axialer Richtung verfahren lässt. Auf diese Weise kann man die axiale Lage Brennflecks des zweiten Messstrahls 70b zu verlagern. Insbesondere ist es möglich, diesen Brennfleck genau im zweiten Messpunkt MPb zu positionieren, wie dies die Figur 11 illustriert. Auf diese Weise erhält man einen stärkeren Lichtreflex von der Oberfläche 92 des Werkstücks 24.

b) Aufspaltung in Pupillennähe

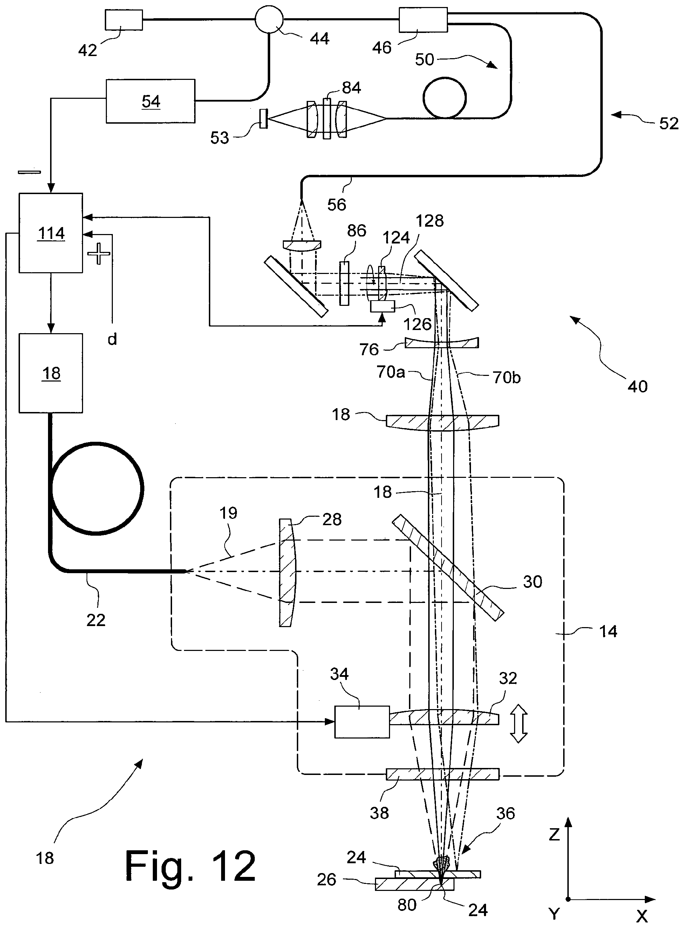

Die Figur 12 zeigt ein drittes Ausführungsbeispiel für eine erfindungsgemäße Laserbearbeitungsvorrichtung 10 in einer ebenfalls an die Figur 2 angelehnten Darstellung.

Bei der in der Figur 12 gezeigten Laserbearbeitungsvorrichtung 10 werden die beiden Messstrahlen 70a, 70b von einem speziellen asphärischen optischen Element 124 erzeugt, das sich pupillennah im Strahlengang des Messlichts 48 befindet. Während eines Messvorgangs wird das optische Element 124 dabei von einem Antrieb 126 um eine mit der optischen Achse zusammenfallende Drehachse 128 gedreht.

Die Figuren 13a und 13b zeigen das optische Element 124 in zwei Drehstellungen, die sich um einen Drehwinkel von 180° voneinander unterscheiden. Das optischen Element 124 hat im Wesentlichen die Form einer plan-konvexen Linse mit einer sphärischen Oberfläche. In der Figur 13a ist die Symmetrieachse dieser Oberfläche mit 130 bezeichnet. Dezentriert zu der Symmetrieachse 130, aber zentriert relativ zu der Drehachse 128, weist die Oberfläche eine zylindrische Ausnehmung 132 mit Radius R1 auf, deren plane Oberfläche parallel zur eingangsseitigen Planfläche 134 ist. Für kollimiertes Messlicht, das mit einem Abstand $r < R1$ von der Drehachse 128 auf das optische Element 124 trifft, wirkt das optische Element 124 somit in allen Drehstellungen wie eine planparallele Platte.

Für Licht, das mit einem Abstand $r > R1$ auf das optische Element 124 trifft, wirkt dieses wie eine dezentriert angeordnete Linse mit positiver Brechkraft. Je nach Drehstellung des optischen Elements 124 wird das Messlicht deswegen in unterschiedliche Richtungen abgelenkt, wie man durch Vergleich der Figuren 13a und 13b erkennt.

Das die zylindrische Ausnehmung 132 durchtretende Messlicht bildet den ersten Messstrahl 70a, während das den ringförmigen umliegenden Bereich durchtretende Messlicht den zweiten Messstrahl 70b bildet. Ähnlich wie bei der rotierenden Keilplatte 60 des in der Figur 2 beschriebenen Ausführungsbeispiels erzeugt das rotierende optische Element 124 somit einen stationären ersten Messstrahl 70a und einen zweiten Messstrahl 70b, der kreisförmig um den ersten Messstrahl 70a umläuft.

Da der zweite Messstrahl 70b den konvex gekrümmten Abschnitt der Oberfläche des optischen Elements 124 durchtritt, werden die beiden Messstrahlen 70a, 70b auch bei diesem Ausführungsbeispiel in unterschiedlichen Brennebenen fokussiert.

**Patentansprüche**

1. Verfahren zum Messen der Eindringtiefe (d) eines Laserstrahls (19) in ein Werkstück (24), umfassend die folgenden Schritte:

a) Fokussieren des Laserstrahls (19) in einem Brennfleck (22) mit Hilfe einer in einem Bearbeitungskopf (14) angeordneten Fokussieroptik (32), wodurch der Brennfleck in dem Werkstück eine Dampfkapillare (88) erzeugt;

b) Erzeugen eines ersten Messstrahls (70a) und eines zweiten Messstrahls (70b) mit einem optischen Kohärenztomographen (40);

c) Richten des ersten Messstrahls (70a) auf einen stationären ersten Messpunkt (MPa) in der Dampfkapillare (88), um dadurch einen ersten Abstand (a1) zwischen einem Referenzpunkt und dem ersten Messpunkt zu messen;

d) Gleichzeitig mit Schritt c) Richten des zweiten Messstrahls (70b) auf einen zweiten Messpunkt (MPb) auf einer zum Bearbeitungskopf (14) weisenden Oberfläche (92) des Werkstücks (24) außerhalb des Dampfkapillare (88), um dadurch einen zweiten Abstand (a2) zwischen dem Referenzpunkt und dem zweiten Messpunkt zu messen;

e) Bestimmen der Eindringtiefe (d) des Laserstrahls (19) aus dem ersten Abstand (a1) und dem zweiten Abstand (a2);

**dadurch gekennzeichnet, dass**
in Schritt d) der zweite Messstrahl (70b) mit einer Scaneinrichtung (113) sukzessive auf unterschiedliche zweite Messpunkte (MPb) auf der Oberfläche (92) des Werkstücks (24) gerichtet wird, und dass
der erste Messstrahl von dem zweiten Messstrahl beim Auftreffen auf das Werkstück (24) durch einen messlichtfreien Raum getrennt ist.

2. Verfahren nach Anspruch 1, bei dem der erste Messpunkt (MPa) sich am Grund der Dampfkapillare (88) befindet.

3. Verfahren nach Anspruch 1 oder 2, bei dem die Schritte b) bis c) mehrfach wiederholt und aus daraus erhaltenen Messwerten für den ersten Abstand (a1) ein Anteil von Messwerten ausgewählt wird, welche die größten ersten Abstände (a1) repräsentieren.

4. Verfahren nach einem der vorhergehenden Ansprüche, bei dem der zweite Messpunkt (MPb) von einem Rand der Dampfkapillare (88) einen seitlichen Abstand von weniger als 2.5 mm, vorzugsweise von weniger als 1 mm, hat.

5. Verfahren nach Anspruch 1, bei dem zumindest einige der unterschiedlichen zweiten Messpunkte (MPb) auf einem Kreis (102) liegen, der die Dampfkapillare (88) umschließt.

6. Verfahren nach einem der vorhergehenden Ansprüche, bei dem der erste Messstrahl (70a) koaxial zu dem Laserstrahl (19) die Fokussieroptik (32) des Bearbeitungskopfes (14) durchtritt.

7. Verfahren nach Anspruch 6, bei dem die Fokussieroptik (32) eine veränderbare Brennweite hat, so dass der erste Messstrahl (70a) von der Fokussieroptik stets in der gleichen Brennebene fokussiert wird, in der sich auch der Brennfleck (22) des Laserstrahls (19) befindet.

8. Verfahren nach einem der vorhergehenden Ansprüche, bei dem der erste Messstrahl (70a) und der zweite Messstrahl (70b) zumindest ein optisches Element (44, 46, 54) des optischen Kohärenztomographen (40) gemeinsam nutzen.

9. Verfahren nach Anspruch 8, bei dem von dem optischen Kohärenztomographen (40) erzeugtes Messlicht in einem Objektarm (52) des Kohärenztomographen in den ersten Messstrahl (70a) und den zweiten Messstrahl (70b) aufgeteilt wird.

10. Verfahren nach einem der vorhergehenden Ansprüche, bei dem in Abhängigkeit von der in Schritt e) bestimmten Eindringtiefe (d) wenigstens ein Parameter der Laserbearbeitung, insbesondere die Leistung des Laserstrahls (19) oder die Lage des Brennflecks (22) relativ zu dem Werkstück (24), verändert wird.

11. Verfahren nach Anspruch 10, bei dem die in Schritt e) bestimmte Eindringtiefe (d) als Messgröße einem Regelkreis zu Regelung der Tiefe der Dampfkapillare (88) zugeführt wird.

12. Verfahren nach einem der vorhergehenden Ansprüche, bei dem in einem automatischen Justierschritt die Lage des ersten Messpunkts (MPa) solange mit Hilfe eines auf den ersten Messstrahl (70a) einwirkenden Stellelements (113) verändert wird, bis der Anteil an verwertbaren Abstands-Messwerten maximal ist.

13. Verfahren zur Bearbeitung eines Werkstücks (24) mit einem Laserstrahl (19), bei dem in einem ersten Schritt die Eindringtiefe des Laserstrahls (19) in das Werkstück (24) gemäß einem der vorhergehenden Ansprüche gemessen wird und in einem zweiten Schritt die gemessene Eindringtiefe (d) als Messgröße einem Regelkreis zu Regelung der Tiefe der Dampfkapillare (88) zugeführt wird.

14. Laserbearbeitungsvorrichtung, die für die Bearbeitung eines Werkstücks (24) mit einem Laserstrahl (19) eingerichtet ist, mit

a) einer Fokussieroptik (32), die dazu eingerichtet ist, den Laserstrahl (19) in einem Brennfleck (22) zu fokussieren,
b) einem optischen Kohärenztomographen (40), der dazu eingerichtet ist,

- einen ersten Messstrahl (70a) auf einen stationären ersten Messpunkt (MPa) in der Dampfkapillare (88) zu richten, die auf dem Werkstück von dem Brennfleck (22) erzeugt wurde, und dadurch einen ersten Abstand (a1) zwischen einem Referenzpunkt und dem ersten Messpunkt (MPa) zu messen, und
- gleichzeitig einen zweiten Messstrahl (70b) auf einen zweiten Messpunkt (MPb) auf einer Oberfläche (92) des Werkstücks (24) außerhalb der Dampfkapillare (88) zu richten und dadurch einen zweiten Abstand (a2) zwischen dem Referenzpunkt und dem zweiten Messpunkt (MPb) zu messen,

c) einer Auswerteeinrichtung (114), die dazu eingerichtet ist, aus dem ersten Abstand (a1) und dem zweiten Abstand (a2) die Eindringtiefe (d) des Laserstrahls (19) zu bestimmen,

**gekennzeichnet durch**
eine in einem Objektarm (52) des Kohärenztomographen angeordneten Scaneinrichtung (113), die dazu eingerichtet ist, den zweiten Messstrahl (70b) sukzessive auf unterschiedliche zweite Messpunkte (MPb) auf der Oberfläche (92) des Werkstücks (24) zu richten, wobei der erste Messstrahl von dem zweiten Messstrahl beim Auftreffen auf das Werkstück (24) **durch** einen messlichtfreien Raum getrennt ist.

## Claims

1. Method of measuring the depth of penetration (d) of a laser beam (19) into a workpiece (24), comprising the following steps:

   a) focusing the laser beam (19) in a focal spot (22) by aid of a focusing optics (32) arranged in a machining head (14), whereby the focal spot generates a vapor capillary (88) in the workpiece;
   b) generating a first measuring beam (70a) and a second measuring beam (70b) with an optical coherence tomograph (40);
   c) directing the first measuring beam (70a) at a stationary first measuring point (MPa) in the vapor capillary (88) in order to thereby measure a first distance (a1) between a reference point and the first measuring point;
   d) concurrently with step c), directing the second measuring beam (70b) at a second measuring point (MPb) on a surface (92) of the workpiece (24) facing the machining head outside of the vapor capillary (88) in order to thereby measure a second distance (a2) between the reference point and the second measuring point;
   e) determining the depth of penetration (d) of the laser beam (19) from the first distance (a1) and the second distance (a2);

   **characterized in that**
   in step d), the second measuring beam (70b) is directed successively at different second measuring points (MPb) on the surface (92) of the workpiece (24) with a scanning device (113), and **in that**
   the first measuring beam is, upon impinging the workpiece (24), separated from the second measuring beam by a space free of measuring light.

2. Method according to Claim 1, in which the first measuring point (MPa) is located at the ground of the vapor capillary (88).

3. Method according to Claim 1 or 2, in which the steps b) to c) are repeated a number of times and of measurement values thereby obtained for the first distance (a1) a quota of measurement values is selected which represent the largest first distances (a1).

4. Method according to one of the preceding Claims, in which the second measuring point (MPb) is at a lateral distance of less than 2.5 mm, preferentially of less than 1 mm, from an edge of the vapor capillary (88).

5. Method according to Claim 1, in which at least some of the different second measuring points (MPb) lie on a circle (102) which encloses the vapor capillary (88).

6. Method according to one of the preceding Claims, in which the first measuring beam (70a) passes through the focusing optics (32) of the machining head (14) coaxially to the laser beam (19).

7. Method according to Claim 6, in which the focusing optics (32) has a variable focal length so that the first measuring beam (70a) is always focused in the same focal plane by the focusing optics in which the focal spot (22) of the laser beam (19) is also located.

8. Method according to one of the preceding Claims, in which the first measuring beam (70a) and the second measuring beam (70b) jointly use at least one optical element (44, 46, 54) of the optical coherence tomograph (40).

9. Method according to Claim 8, in which measuring light generated by the optical coherence tomograph (40) is split into the first measuring beam (70a) and the second measuring beam (70b) in an object arm (52) of the coherence tomograph.

10. Method according to one of the preceding Claims, in which at least one parameter of the laser machining operation, in particular the power of the laser beam (19) or the location of the focal spot (22) relative to the workpiece (24), is varied in dependence on the depth of penetration (d) determined in step e).

11. Method according to Claim 10, in which the depth of penetration (d) determined in step e) is fed, as a measured variable, to a closed-loop control circuit for controlling the depth of the vapor capillary (88).

12. Method according to one of the preceding Claims, in which, in an automatic adjusting step, the location of the first measuring point (MPa) is varied by aid of a positioning element (113) acting on the first measuring beam (70a) until the quota of utilizable distance-measurement values is at its maximum.

13. Method of machining a workpiece (24) with a laser beam (19), in which, in a first step, the depth of penetration of the laser beam (19) into the workpiece (24) is measured according to one of the preceding Claims, and in a second step, the measured depth of penetration (d) is fed, as a measured variable, to a closed-loop control circuit for controlling the depth of the vapor capillary (88).

14. Laser machining device which is configured for the machining of a workpiece (24) with a laser beam (19), comprising

   a) a focusing optics (32) which is configured to focus the laser beam (19) in a focal spot (22),
   b) an optical coherence tomograph (40) which is configured to

   - direct a stationary first measuring beam (70a) at a first measuring point (MPa) in the vapor capillary (88), which vapor capillary (88) has been generated on the workpiece (24) by the focal spot (22), and thereby measuring a first distance (a1) between the reference point and the first measuring point (MPa), and
   - concurrently direct a second measuring beam (70b) at a second measuring point (MPb) on a surface (92) of the workpiece (24) outside the vapor capillary (88) and thereby measuring a second distance (a2) between the reference point and the second measuring point (MPb),

   c) an evaluation device (114) which is configured to determine the depth of penetration (d) of the laser beam (19) from the first distance (a1) and the second distance (a2),

   **characterized by**
   a scanning device (113) which is arranged in an object arm (52) of the coherence tomograph, which scanning device (113) is configured to direct the second measuring beam (70b) successively at different second measuring points (MPb) on the surface (92) of the workpiece (24), wherein the first measuring beam is, upon impinging the workpiece (24), separated from the second measuring beam by a space free of measuring light.

## Revendications

1. Procédé de mesure de la profondeur de pénétration (d) d'un faisceau laser (19) dans une pièce (24), incluant les étapes suivantes consistant à :

   a) focaliser le faisceau laser (19) en un point focal (22), à l'aide d'une optique de focalisation (32) implantée dans une tête d'usinage (14), ledit point focal créant un capillaire de vapeur (88) dans ladite pièce ;

b) engendrer un premier faisceau de mesure (70a) et un second faisceau de mesure (70b) par un tomographe à cohérence optique (40) ;

c) diriger ledit premier faisceau de mesure (70a) vers un premier point de mesure (MPa) stationnaire, dans le capillaire de vapeur (88), afin de mesurer ainsi une première distance (a1) entre un point de référence et ledit premier point de mesure ;

d) en simultanéité avec l'étape c), diriger ledit second faisceau de mesure (70b) vers un second point de mesure (MPb) à l'extérieur dudit capillaire de vapeur (88), sur une surface (92) de la pièce (24) pointant vers la tête d'usinage (14), afin de mesurer ainsi une seconde distance (a2) entre ledit point de référence et ledit second point de mesure ;

e) déterminer la profondeur de pénétration (d) du faisceau laser (19) sur la base de la première distance (a1) et de la seconde distance (a2) ;

**caractérisé par le fait**

**qu'**à l'étape d), le second faisceau de mesure (70b) est successivement dirigé, par un dispositif de scannage (113), vers différents seconds points de mesure (MPb) sur la surface (92) de la pièce (24) ; et par le fait

**que**, lors de l'incidence sur ladite pièce (24), le premier faisceau de mesure est séparé dudit second faisceau de mesure par un espace exempt de lumière de mesure.

2. Procédé selon la revendication 1, dans lequel le premier point de mesure (MPa) est situé au fond du capillaire de vapeur (88).

3. Procédé selon la revendication 1 ou 2, dans lequel les étapes b) à c) sont réitérées plusieurs fois et une proportion de valeurs mesurées, représentatives des premières distances (a1) maximales, est sélectionnée parmi des valeurs mesurées qui se rapportent à la première distance (a1) et sont obtenues à partir desdites étapes.

4. Procédé selon l'une des revendications précédentes, dans lequel le second point de mesure (MPb) est éloigné, d'un bord du capillaire de vapeur (88), d'une distance latérale inférieure à 2,5 mm, de préférence inférieure à 1 mm.

5. Procédé selon la revendication 1, dans lequel au moins quelques-uns des différents seconds points de mesure (MPb) sont situés sur une circonférence (102) entourant le capillaire de vapeur (88).

6. Procédé selon l'une des revendications précédentes, dans lequel le premier faisceau de mesure (70a) traverse l'optique de focalisation (32) de la tête d'usinage (14) coaxialement au faisceau laser (19).

7. Procédé selon la revendication 6, dans lequel l'optique de focalisation (32) présente une longueur focale variable, de sorte que le premier faisceau de mesure (70a) est focalisé en permanence, par ladite optique de focalisation, dans le même plan focal que celui dans lequel le point focal (22) du faisceau laser (19) est également disposé.

8. Procédé selon l'une des revendications précédentes, dans lequel le premier faisceau de mesure (70a) et le second faisceau de mesure (70b) utilisent, conjointement, au moins un élément optique (44, 46, 54) du tomographe à cohérence optique (40).

9. Procédé selon la revendication 8, dans lequel de la lumière de mesure, engendrée par le tomographe à cohérence optique (40), est scindée en le premier faisceau de mesure (70a) et en le second faisceau de mesure (70b) dans un bras d'objet (52) dudit tomographe à cohérence.

10. Procédé selon l'une des revendications précédentes, dans lequel au moins un paramètre de l'usinage au laser, en particulier la puissance du faisceau laser (19) ou la position du point focal (22) par rapport à la pièce (24), est modifié en fonction de la profondeur de pénétration (d) déterminée à l'étape e).

11. Procédé selon la revendication 10, dans lequel la profondeur de pénétration (d) déterminée à l'étape e) est délivrée, en tant que grandeur de mesure, à un circuit de régulation conçu pour réguler la profondeur du capillaire de vapeur (88).

12. Procédé selon l'une des revendications précédentes, dans lequel la position du premier point de mesure (MPa) est modifiée au cours d'une étape d'ajustement automatique, à l'aide d'un élément de réglage (113) agissant sur le premier faisceau de mesure (70a), jusqu'à ce que la proportion de valeurs de distance mesurées exploitables soit maximale.

**13.** Procédé d'usinage d'une pièce (24) à l'aide d'un faisceau laser (19), dans lequel, au cours d'une première étape, la profondeur de pénétration dudit faisceau laser (19) dans ladite pièce (24) est mesurée en conformité avec l'une des revendications précédentes et, au cours d'une seconde étape, la profondeur de pénétration (d) mesurée est délivrée, en tant que grandeur de mesure, à un circuit de régulation conçu pour réguler la profondeur du capillaire de vapeur (88).

**14.** Dispositif d'usinage au laser, agencé pour usiner une pièce (24) à l'aide d'un faisceau laser (19) et comprenant

    a) une optique de focalisation (32), configurée pour focaliser ledit faisceau laser (19) en un point focal (22),
    b) un tomographe à cohérence optique (40), configuré

        - pour diriger un premier faisceau de mesure (70a) vers un premier point de mesure (MPa) stationnaire, dans le capillaire de vapeur (88) qui a été créé sur ladite pièce par ledit point focal (22), et pour mesurer ainsi une première distance (a1) entre un point de référence et ledit premier point de mesure (MPa), et
        - pour diriger simultanément un second faisceau de mesure (70b) vers un second point de mesure (MPb) sur une surface (92) de ladite pièce (24), à l'extérieur dudit capillaire de vapeur (88), et pour mesurer ainsi une seconde distance (a2) entre ledit point de référence et ledit second point de mesure (MPb),

    c) un dispositif d'évaluation (114), configuré pour déterminer la profondeur de pénétration (d) du faisceau laser (19) sur la base de la première distance (a1) et de la seconde distance (a2),

**caractérisé par**
un dispositif de scannage (113), intégré dans un bras d'objet (52) du tomographe à cohérence et configuré pour diriger successivement le second faisceau de mesure (70b) vers différents seconds points de mesure (MPb) sur la surface (92) de la pièce (24),
sachant que, lors de l'incidence sur ladite pièce (24), le premier faisceau de mesure est séparé dudit second faisceau de mesure par un espace exempt de lumière de mesure.

# Fig.1

# Fig. 3a

# Fig. 3b

# Fig. 2

Fig. 4

Fig. 5

Fig. 6

Fig. 7

Fig. 8

Fig. 9
(Prior Art)

Fig. 10

Fig. 11

Fig. 13a

Fig. 13b

Fig. 12

**EP 3 049 755 B1**

**IN DER BESCHREIBUNG AUFGEFÜHRTE DOKUMENTE**

**In der Beschreibung aufgeführte Patentdokumente**

- EP 1977850 A1
- DE 102010016862 B3
- US 20120138586 A
- US 20120285936 A1
- DE 102007032743 A1
- US 20120138586 A1
- EP 2972479 A1
- DE 102013008269